# EUROPÄISCHE PATENTSCHRIFT

(11) **EP 2 581 411 B1**
(45) Veröffentlichungstag und Bekanntmachung des Hinweises auf die Patenterteilung: **03.09.2014**
(21) Anmeldenummer: 11184700.0
(22) Anmeldetag: 11.10.2011
(51) Int. Cl.: C08L 67/02, C08L 75/04, C08L 77/00, C08L 23/16

(54) **Kunststoffzusammensetzung und Verfahren zu dessen Herstellung**
Plastic compound and method for its production
Composition de matière synthétique et son procédé de fabrication

(43) Veröffentlichungstag der Anmeldung: 17.04.2013
(73) Patentinhaber: PTS-Plastic Technologie Service, Compound-Produktions GmbH, 91628 Steinsfeld (DE)
(72) Erfinder: Stenglin, Uwe, 91587 Adelshofen (DE); Sänger, Jörg, Dr., 83512 Wasserburg a. Inn (DE); Elsässer, Hartmut, Dr., 91628 Steinsfeld (DE)
(74) Vertreter: Walcher, Armin

(56) Entgegenhaltungen:
- EP-A1- 0 837 097
- EP-A1- 0 921 153
- EP-A1- 1 136 219
- EP-A1- 2 161 125
- US-A1- 2007 264 514

## Beschreibung

Die Erfindung betrifft eine Kunststoffzusammensetzung, die eine Mischung mit thermoplastischem propylenhaltigen Elastomer und wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält, aufweist. Die Erfindung betrifft des Weiteren auch Verfahren zur Herstellung dieser Kunststoffzusammensetzung.

Thermoplastische Elastomere sind seit langem bekannt und dadurch gekennzeichnet, dass diese elastische und thermoplastische Komponenten enthalten. Die elastische und thermoplastische Komponente können als Blockcopolymer oder aber auch als Elastomerlegierung vorliegen. Thermoplastische Elastomere unterscheiden sich von Elastomeren, die strukturell ein weitmaschiges Raumnetz aufweisen, dadurch, dass in den thermoplastischen Teilbereichen physikalische Vernetzungspunkte entstehen, die bei Beaufschlagung mit Wärme aufgehoben werden. Die thermoplastischen Elastomere zeichnen sich durch ein gutes Rückstellverhalten, eine angenehme Haptik und einfache Verarbeitbarkeit ohne Notwendigkeit der nachträglichen Vernetzung aus. Somit werden thermoplastische Elastomere als Werkstoffe, insbesondere im Automobilinnenbereich, als Bedienelemente, Griffabdeckungen, Bedienräder und auch für flächige Abdeckungen wie Armaturenbretter oder Türverkleidungen, verwendet.

Dabei werden die thermoplastischen Elastomere häufig als Weichkomponente in einem so genannten Hart-Weich-Verbund verwendet.

Ein großer Nachteil der thermoplastischen Elastomere ist deren geringe Kratzbeständigkeit. Da beispielsweise Armaturenbretter, Türverkleidungen und Armlehnen jahrelang starken mechanischen Beanspruchungen ausgesetzt sind, werden diese stark verkratzt. Dadurch entsteht ein minderwertiger optischer Eindruck der Ausstattung eines Kraftfahrzeuges, was naturgemäß unerwünscht ist und auch zu einer Verminderung des Wiederverkaufswertes eines solchen Kraftfahrzeuges führt.

Um zugleich eine angenehme Haptik und eine gute Kratzfestigkeit aufzuweisen, werden teure PVC-Kunstleder (PVC: Polyvinylchlorid) mit Polyurethanschäumen auf einem harten Träger kombiniert. Der harte Träger ist ebenfalls ein hochwertiger Werkstoff, wie Polycarbonat, Polyester, Polyamid, ABS-Polymere (ABS: Acrylnitril-Butadien-Styrol), SMA-Polymere (SMA: Styrol-Maleinsäureanhydrid), SMA-Blends oder Mischungen davon.

Ein preisgünstiger und im Automobil häufig verwendeter Werkstoff ist Polypropylen. Nachteiligerweise haften nur wenige Kunststoffe auf Polypropylen. Thermoplastische Polystyrolelastomere oder thermoplastische Polyolefine haften zwar auf Polypropylen, weisen jedoch nachteiligerweise eine geringe Kratzfestigkeit auf.

Aus der WO 2008/082442 A1 ist eine Kunststoffzusammensetzung aus einem Ethylenpolymer und einem thermoplastischen Elastomer bekannt. Das Ethylenpolymer beinhaltet dabei Ethylen-Vinylacetat-Copolymer, Polyethylen, Ethylen-Säure-Copolymer, lonomer des Säure-Copolymers, Ethylen-Alkyl(meth) acrylat-Copolymer oder Kombinationen von zwei oder mehreren davon. Die Zusammensetzung besteht im Wesentlichen aus Ethylenpolymer und einem geringeren Anteil an thermoplastischem Elastomer. Das thermoplastische Elastomer kann dabei beinhalten Copolyetherester, Copolyetheramide, Polyolefinelastomere, Styrol-Dien-Blockcopolymere, thermoplastisches Polyurethan und Kombinationen dieser. Die Zusammensetzung enthält dabei 50 bis 98 Gew,-%, vorzugsweise 70 bis 90 Gew.-% Ethylenpolymer, wie vorstehend definiert. Es hat sich gezeigt, dass ein Kunststoffschaum auf Basis von Ethylenpolymer mit Anteilen an thermoplastischem Elastomer nicht die Bereitstellung von kratzfesten Kunststoffschäumen mit guter Haptik ermöglicht. Des Weiteren weisen Kunststoffschäume auf Basis von nicht-elastomeren thermoplastischen Ethylenpolymeren abhängig vom Gehalt an polarem Comonomer oft keine ausreichende Verbundhaftung zu Polypropylensubstraten auf.

Die EP 2 161 125 A1 offenbart ein Kunststoffverbundformteil, das thermoplastisches Elastomer aus hydrierten Slyrol-Blockcopolymeren (HSBC), thermoplastischen Polyetherblockamiden (TPE-A) thermoplastischen Polyester-Elastomeren (TPE-E) und thermoplastischen Polyurethanen (TPU) enthält.

Die EP 1 136 219 A1 offenbart einen Verbundformkörper mit einem steifen thermoplastischen Träger sowie einer darauf befindlichen und daran haftenden weichen thermoplastischen Schicht. Die EP 0 921 153 A1 offenbart eine Mischung aus einem nicht-polaren thermoplastischen Elastomer und einem polaren thermoplastischen Polymer.

Die EP 0 837 097 A1 offenbart Blockcopolymere, die chemisch modifiziertes Polyolefin, thermoplastisches Polyurethan (TPU), Copolyester oder Copolyamid sowie ein oder mehrere Kopplungsmittel enthält.

Die US 2007/0264514 A1 offenbart eine Zusammensetzung, bei der ein wenigstens teilweise vernetztes Ethylen-Propylen-Dien-Gummi in Mischung mit einem nicht-olefinischen thermoplastischen Material vorliegt.

Aufgabe der Erfindung ist es mithin, eine Kunststoffzusammensetzung bereitzustellen, die die Herstellung von Kunststoffschäumen mit kratzfester Oberfläche und angenehmer Haptik ermöglicht. Darüber hinaus soll der Kunststoffschaum eine gute Haftkraft auf einem Polypropylensubstrat aufweisen.

Ebenfalls ist es Aufgabe der Erfindung, ein Kunststoffgranulat zur Herstellung eines solchen Kunststoffschaums bereitzustellen.

Weiterhin ist es Aufgabe der Erfindung, ein Verfahren zur Herstellung einer solchen Kunststoffzusammensetzung bereitzustellen.

Die Aufgabe der Erfindung wird durch Bereitstellung einer Kunststoffzusammensetzung, vorzugsweise eines Granulats, gemäß Anspruch 1 gelöst.

Bevorzugte weitere Ausführungsformen der Kunststoffzusammensetzung sind in den Ansprüchen 2 bis 14 angegeben.

Die Aufgabe der Erfindung wird des Weiteren durch Bereitstellung eines Verfahrens zur Herstellung einer Kunststoffzusammensetzung nach einem der Ansprüche 1 bis 14 gelöst, wobei das Verfahren folgende Schritte aufweist:
(a) Plastifizieren oder Schmelzen des thermoplastischen propylenhaltigen Elastomers mit wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält,
(b) Mischen der in Schritt (a) plastifizierten oder geschmolzenen Komponenten.

Eine bevorzugte Variante dieses Verfahrens ist in Anspruch 16 angegeben.

Ebenfalls wird die der Erfindung zugrunde liegende Aufgabe durch Bereitstellung eines Verfahrens zur Herstellung einer Kunststoffzusammensetzung, vorzugsweise eines Granulats, nach einem der Ansprüche 1 bis 14 gelöst, wobei das Verfahren folgende Schritte aufweist:
(a) Plastifizieren oder Schmelzen des thermoplastischen propylenhaltigen Elastomers mit wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält,
(b) Mischen der in Schritt (a) plastifizierten oder geschmolzenen Komponenten,
(c) Verschäumen der in Schritt (b) erhaltenen Mischung,
(d) Formen der in Schritt (c) erhaltenen schäumenden und/oder geschäumten Mischung,
unter Erhalt eines Kunststoffschaums.

Schließlich wird die Aufgabe der Erfindung auch durch Bereitstellung eines Verfahrens zur Bereitstellung einer Kunststoffzusammensetzung nach einem der Ansprüche 1 bis 14 gelöst, wobei das Verfahren folgende Schritte aufweist:
(a) Plastifizieren oder Schmelzen eines Granulats, das eine Mischung mit thermoplastischem propylenhaltigen Elastomer und wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält, aufweist,
(b) Verschäumen der in Schritt (a) plastifizierten oder geschmolzenen Masse,
(c) Formen der in Schritt (b) erhaltenen schäumenden und/oder geschäumten Masse,
unter Erhalt eines Kunststoffschaums.

Bevorzugte Varianten dieser Verfahren sind in den Ansprüchen 19 und 20 angegeben.

"Propylenhaltig" bedeutet im Sinne der Erfindung, dass Propylenmonomereinheiten statistisch, regelmäßig, beispielsweise als Blockcopolymer, oder alternierend in dem das Elastomer aufbauende Polymer angeordnet sind.

Die Erfinder haben überraschend herausgefunden, dass eine auf einem thermoplastischen propylenhaltigen Elastomer und wenigstens einem weiteren thermoplastischen Elastomer, das aus der Gruppe, die thermoplastisches Copolyesterelastomer, thermoplastisches Polyurethanelastomer, thermoplastisches Polyamidelastomer und Mischungen davon enthält, ausgewählt wird, basierende Kunststoffzusammensetzung gemäß Anspruch 1 die Bereitstellung von Formkörpern mit sehr guter Kratzfestigkeit und angenehmer Haptik ermöglicht. Des Weiteren ist die erfindungsgemäße Kunststoffzusammensetzung sehr gut verschäumbar. Darüber hinaus erlaubt diese Kunststoffzusammensetzung die Bereitstellung eines Verbundmaterials mit einem Polypropylen-haltigen Substrat, wobei der Kunststoffschaum mit hervorragender Haftkraft an dem Polypropylen-haltigen Substrat, vorzugsweise Polypropylensubstrat, haftet. Die vorliegende Erfindung betrifft mithin ebenfalls ein Verbundmaterial oder einen Verbundkörper, bei dem die erfindungsgemäße Kunststoffzusammensetzung, vorzugsweise ein erfindungsgemäßer Kunststoffschaum, mit einem Polypropylen-haltigen Substrat, vorzugsweise einem Polypropylensubstrat, verbunden, vorzugsweise stoffschlüssig verbunden sind.

Erstaunlicherweise können aus diesem thermoplastischen propylenhaltigen Elastomer und dem wenigstens einen weiteren thermoplastischen Elastomer, das aus der Gruppe, die aus thermoplastischem Copolyesterelastomer, thermoplastischem Polyurethanelastomer, thermoplastischem Polyamidelastomer und Mischungen davon besteht, ausgewählt wird, homogene Kunststoffzusammensetzungen gemäß Anspruch 1 bereitgestellt werden. Die Kunststoffzusammensetzung kann dabei als Elastomerlegierung vorliegen.

Darüber hinaus hat sich überraschenderweise herausgestellt, dass die erfindungsgemäße Kunststoffzusammensetzung, vorzugsweise in Form von Kunststoffgranulat oder Kunststoffschaum, eine sehr gute Lichtbeständigkeit aufweist. Das Granulat kann in Form von Pellets, Würstchen, Tabletten, Briketts, etc. vorliegen. Vorzugsweise liegt das Granulat in Form von Pellets oder Würstchen vor. Die Partikelgröße des Granulats liegt vorzugsweise in einem Bereich von 0,05 bis 50 mm, weiter bevorzugt von 1 bis 20 mm, noch weiter bevorzugt von 2 bis 10 mm. Das erfindungsgemäße Granulat oder Kunststoffgranulat kann auch als thermoplastisches Kunststoffelastomergranulat oder als schäumbares thermoplastisches Kunststoffelastomergranulat bezeichnet werden.

Die Erfindung erlaubt mithin eine wirtschaftliche Herstellung von kostengünstigeren und leichtgewichtigen Bauteilen mit angenehmer Haptik und hoher Kratzfestigkeit.

Gemäß einer bevorzugten Weiterbildung der Erfindung liegt das thermoplastische propylenhaltige Elastomer in einem Anteil von 20 bis 80 Gew.-%, weiter bevorzugt von 25 Gew.-% bis 65 Gew.-%, noch weiter bevorzugt von 29 Gew.-% bis 55 Gew.-%, jeweils bezogen auf das Gesamtgewicht des thermoplastischen propylenhaltigen Elastomers und dem wenigstens einen weiteren thermoplastischen Elastomer, vor.

Als thermoplastische propylenhaltige Elastomere eignen sich insbesondere PP/PE (Polypropylen/Polyethylen)-Elastomere, PP/EPDM (Polypropylen/ Ethylen/Propylen/ Dien-Monomer Terpolymer)-Elastomere oder Mischungen davon.

Bei dem Polypropylenanteil von/vom Polypropylen-haltigen thermoplastischen Elastomer(en) kann es sich um ataktisches Polypropylen, isotaktisches Propylen oder syndiotaktisches Polypropylen handeln.

Gemäß einer bevorzugten Ausführungsform handelt es sich bei dem Polypropylen um isotaktisches Polypropylen.

Des Weiteren können als thermoplastische propylenhaltige Elastomere auch ein kristallisierbares oder teilkristallines Copolymer aus Propylen und einem oder mehreren weiteren α-Olefinen verwendet werden. Ebenfalls kann eine Schmelzmischung eines plastischen Polyolefins, vorzugsweise eines Propylenpolymers, mit einem nicht-vernetzten Olefincopolymerelastomer, beispielsweise einem Ethylenpropylenkautschuk (EPM) und Mischungen davon verwendet werden.

Das thermoplastische propylenhaltige Elastomer weist vorzugsweise einen niedrigen Kristallinitätsgrad auf. Der Kristallinitätsgrad liegt vorzugsweise in einem Bereich von 1 bis 65 %, weiter bevorzugt von 2 bis 35 %, noch weiter bevorzugt von 3 bis 20 %.
Die Bestimmung des kristallinen Anteils des thermoplastischen Olefin-haltigen Elastomers erfolgt gemäß ISO 11357-3 mittels DSC (DSC: Differential Scanning Calorimetry). Der Kristallinitätsgrad in Prozent wird dabei berechnet als der Quotient der Schmelzenthalpie der Probe, geteilt durch Schmelzenthalpie des Kunststoffes bei 100% Kristallinitätsgrad, multipliziert mit 100 [(Schmelzenthalpie der Probe/Schmelzenthalpie des Kunststoffs mit 100 Prozent Kristallinitätsgrad) x 100]. Die Schmelzenthalpie von Polyethylen mit einem Kristallinitätsgrad von 100% beträgt 293 J/g bei einer Schmelztemperatur im Bereich von 105 bis 140°C. Die Schmelzenthalpie von Polypropylen mit einem Kristallinitätsgrad von 100% beträgt 207 J/g bei einer Schmelztemperatur von 150 bis 170°C.

Erfindungsgemäß ist das thermoplastische propylenhaltige Elastomer ein Polypropylen-enthaltendes Copolymer. Dabei liegt der Anteil des Polypropylens in dem Polypropylen-enthaltenden thermoplastischen propylenhaltigen Elastomer in einem Bereich von 51 bis 96 Gew.-%, weiter bevorzugt von 65 bis 95 Gew.-%, noch weiter bevorzugt von 70 bis 94 Gew.-%, noch weiter 80 bis 92 Gew.-%, jeweils bezogen auf das Gesamtgewicht des thermoplastischen propylenhaltigen Elastomers. Vorzugsweise ist das Polypropylen dabei ein isotaktisches Polypropylen. Der Kristallinitätsgrad des Polypropylen-enthaltenden thermoplastischen propylenhaltigen Elastomers liegt dabei vorzugsweise in einem Bereich von 1 bis 65 %, noch weiter bevorzugt von 2 bis 35 %, noch weiter bevorzugt von 3 bis 20 %, jeweils bezogen auf das Gewicht des thermoplastischen propylenhaltigen Elastomers.

Gemäß einer weiteren bevorzugten Variante weist das thermoplastische propylenhaltige Elastomer einen Anteil an Ethylen auf. Der Anteil des Ethylens in dem thermoplastischen propylenhaltigen Elastomer liegt vorzugsweise in einem Bereich von 4 bis 49 Gew.-%, noch weiter bevorzugt von 5 bis 35 Gew.-%, jeweils bezogen auf das Gesamtgewicht des thermoplastischen propylenhaltigen Elastomers. Der Kristallinitätsgrad des propylenhaltigen thermoplastischen Elastomers mit Ethylenanteil liegt dabei vorzugsweise in einem Bereich von 1 bis 65 %, noch weiter bevorzugt von 2 bis 35 %, vorzugsweise von 3 bis 20 %.

Gemäß einer weiteren bevorzugten Ausführungsform ist das propylenhaltige Elastomer ein Polypropylen/Polyethylen-Elastomer. Dabei liegt der Anteil an Polypropylen in einem Bereich von 51 bis 96 Gew.-%, weiter vorzugsweise von 65 bis 95 Gew.-%, und der Anteil an Polyethylen in einem Bereich von 4 bis 49 Gew.-%, weiter vorzugsweise von 5 bis 35 Gew.-%, jeweils bezogen auf das Gesamtgewicht des thermoplastischen propylenhaltigen Elastomers. Vorzugsweise ist das Polypropylen dabei ein isotaktisches Polypropylen. Der Kristallinitätsgrad des thermoplastischen propylenhaltigen Elastomers liegt dabei vorzugsweise in einem Bereich von 1 bis 65 %, weiter vorzugsweise von 2 bis 35 %, noch weiter bevorzugt von 3 bis 20 %, jeweils bezogen auf das Gewicht des thermoplastischen propylenhaltigen Elastomers.

Besonders bevorzugt liegt der Anteil des Polypropylens in einem Bereich von 70 bis 94 Gew.-% und der Anteil von Polyethylen in einem Bereich von 6 bis 30 Gew.-%, jeweils bezogen auf das Gesamtgewicht des thermoplastischen propylenhaltigen Elastomers. Vorzugsweise ist das Polypropylen dabei ein isotaktisches Polypropylen. Der Kristallinitätsgrad des thermoplastischen propylenhaltigen Elastomers liegt dabei vorzugsweise in einem Bereich von 1 bis 65 %, weiter bevorzugt von 2 bis 35 %, noch weiter bevorzugt von 3 bis 20 %.

Gemäß einer weiteren bevorzugten Ausführungsform der Erfindung ist das thermoplastische propylenhaltige Elastomer ein statistisches Copolymer oder Blockcopolymer aus Ethylen und Propylen mit einem Schmelzpunkt in einem Bereich von 0 bis 170°C, weiter bevorzugt in einem Bereich von 20 bis 160°C, noch weiter bevorzugt in einem Bereich von 50 bis 145°C. Der durchschnittliche Propylengehalt beträgt dabei vorzugsweise wenigstens 51 Gew.-%, weiter bevorzugt wenigstens 65 Gew.-%, noch weiter bevorzugt wenigstens 80 Gew.-%, jeweils bezogen auf das Gesamtgewicht des thermoplastischen propylenhaltigen Elastomers. Das Propylen liegt vorzugsweise als isotaktisches Polypropylen vor. Die Isotaktizität des Polypropylens kann bei der Herstellung durch Verwendung geeigneter und dem Fachmann bekannter Polymerisationskatalysatoren hergestellt werden. Das Ethylen/Propylen-Copolymer weist dabei eine statistische Verteilung von Ethylen- und Propylenmonomereinheiten entlang der Polymerkette auf. Als Polymerisationskatalysatoren können beispielsweise Single-Site-Metallocen Katalysatoren verwendet werden, welche nur eine bestimme Verknüpfung von Ethylen und Propylen bei der Polymerisation zulassen. Die Herstellung dieser bei der vorliegenden Erfindung verwendbaren thermoplastischen Polyethylen/Polypropylenelastomere ist in der US 2004/116609 A1 beschrieben, deren Inhalt hiermit unter Bezugnahme aufgenommen ist. Das erhaltene Copolymer weist dabei vorzugsweise bis zu 35 Gew.-% Ethylen und weiter vorzugsweise bis zu 20 Gew.-% Ethylen, das isotaktisch kristallisierbare Propylenabschnitte enthält, auf.

Gemäß einer weiteren bevorzugten Ausführungsform ist das thermoplastische propylenhaltige Elastomer ein kristallisierbares oder teilkristallinisiertes Copolymer aus Propylen und einem weiteren α-Olefin mit vorzugsweise weniger als 21 Kohlenstoffatomen, weiter vorzugsweise weniger als 15 Kohlenstoffatomen, weiter bevorzugt weniger als 9 Kohlenstoffatomen, noch weiter bevorzugt weniger als 5 Kohlenstoffatomen. Ein bevorzugtes α-Olefin ist Ethylen.

Gemäß einer weiteren bevorzugten Ausführungsform der Erfindung ist das thermoplastische Polyolefinelastomer ein statistisches Copolymer mit einer engen Verteilung bezüglich der Zusammensetzung, wie in der US 2004/116609 A1 beschrieben, deren Inhalt hiermit unter Bezugnahme aufgenommen ist. Die aus der US 2004/116609 A1 bekannten thermoplastischen propylenhaltigen Elastomere können bei der vorliegenden Erfindung verwendet werden.

Gemäß einer weiteren bevorzugten Ausführungsform ist das thermoplastische propylenhaltige Elastomer eine Schmelzmischung eines semikristallinen Polyolefins, vorzugsweise eines Propylenpolymers mit einem nicht-vernetzten Olefin-Copolymerelastomer, vorzugsweise einem Ethylenpropylenkautschuk (EPM) oder einem Ethylen-Propylen-Dienkautschuk (EPDM). Dabei ist das semikristalline Polyolefin und/oder das nicht-vernetzte Olefin-Copolymerelastomer propylenhaltig. Der Schmelzpunkt dieser thermoplastischen Polyolefine liegt vorzugsweise in einem Bereich von 0 bis 170°C, vorzugsweise in einem Bereich von 20 bis 160°C, weiter bevorzugt in einem Bereich von 50 bis 145°C. Der durchschnittliche Propylengehalt liegt vorzugsweise bei wenigstens 51 Gew.-%, weiter bevorzugt wenigstens 65 Gew.-%, noch weiter bevorzugt wenigstens 80 Gew.-%.

Das thermoplastische propylenhaltige Elastomer kann dabei durch ein beliebiges Polymerisationsverfahren, einschließlich Koordinationspolymerisation unter Lösungs-, Aufschlämmungs- oder Gasphasenpolymerisationsbedingungen hergestellt werden. Neben Propylen werden als Monomere bevorzugt Olefine mit 2 bis 20 Kohlenstoffatomen, weiter bevorzugt von 2 bis 10 Kohlenstoffatomen, noch weiter bevorzugt von 2 bis 8 Kohlenstoffatomen, verwendet. Ein äußerst geeignetes Monomer ist Ethylen. Der mittels DSC (DSC: Differential Scanning Calorimetry) ermittelte Kristallinitätsgrad der Ethylen- und/oder Propylensequenzen liegt vorzugsweise in einem Bereich von 1 bis 65 %, weiter bevorzugt von 2 bis 35 %, noch weiter bevorzugt von 3 bis 20 %.

Semikristalline Polyolefine sind dem Fachmann wohlbekannt und ein Massenprodukt der chemischen Industrie. Bei dem nicht vernetzten Polyolefincopolymerelastomer, das aus EPDM hergestellt ist, ist das zur Bildung des EPDM Terpolymers verwendete Dienmonomer vorzugsweise ein nicht konjugiertes Dien. Bei dem nicht konjugierten Dien kann es sich beispielsweise um Dicyclopentadien, Alkyldicyclopentadien, wobei Alkyl für einen Rest mit 1 bis 6 Kohlenstoffatomen steht, 1,4-Pentadien, 1,4-Hexadien, 1,5-Hexadien, 1,4-Heptadien, 2-Methyl-1,5-hexadien, Cyclooctadien, 1,4-Octadien, 1,7 Octadien, 5-Ethyliden-2-norbornen, 5-n-Propyliden-2-norbornen, 5-(2-Methyl-2-butenyl)-2-norbornen, etc. handeln. Herkömmliches EPDM, das bei der Herstellung von nicht vernetztem polyolefinischem Copolymerelastomer verwendet werden kann, ist beispielsweise VISTALON, erhältlich von Exxon Chemical Co., USA, ROYALENE, erhältlich von Uniroyal Chemical Co., USA. Die nicht vernetzten Olefin-Copolymerelastomere können durch ein beliebiges Polymerisationsverfahren, einschließlich Koordinationspolymerisation, unter Lösungs-, Aufschlämmungs- oder Gasphasenpolymerisationsbedingungen hergestellt werden.

Besonders bevorzugt werden bei der vorliegenden Erfindung auf Polypropylen basierende thermoplastische propylenhaltige Elastomere verwendet. Bei diesen Polymeren handelt es sich vorzugsweise um ein semikristallines Propylen-Ethylen statistisches Copolymer, wie beispielsweise das von dem Hersteller Exxon Chemical Co. unter der Bezeichnung VISTAMAXX oder das von der Fa. Dow Chemical, USA unter der Bezeichnung VERSIFY vertriebene Polymer.

Ebenfalls sind beispielsweise die von der Fa. LyondellBasell, USA unter den Bezeichnungen SOFTEL, HIFAX und ADFLEX, von der Fa. Mitsui, Japan unter der Bezeichnung ADMER, TAFMER und von der Fa. SO.F.TER, Italien unter der Bezeichnung FORFLEX vertriebenen thermoplastischen propylenhaltigen Elastomere verwendbar.

Selbstverständlich können auch Mischungen dieser thermoplastischen propylenhaltigen Elastomere verwendet werden.

Der α-Olefingehalt, vorzugsweise Ethylengehalt, liegt bei den verwendeten thermoplastischen propylenhaltigen Elastomeren vorzugsweise in einem Bereich von 4 bis 49 Gew.-%, weiter bevorzugt von 5 bis 35 Gew.-%, noch weiter bevorzugt von 8 bis 25 Gew.-%, am meisten bevorzugt von 8 bis 20 Gew.-%. Bei dem α-Olefin handelt es sich vorzugsweise um C2 bis C20 α-Olefine, vorzugsweise um 2 bis 10 α-Olefine, weiter bevorzugt C2 bis C8 α-Olefine. Äußerst bevorzugt handelt es sich bei dem α-Olefin um Ethylen. Die mittels DSC bestimmte Kristallinität des thermoplastischen propylenhaltigen Elastomers liegt dabei in einem Bereich von vorzugsweise 1 bis 65 %, weiter bevorzugt von 2 bis 35 %, vorzugsweise von 3 bis 20 %. Der mittels DSC mit einer Heizrate von 10 K/min bestimmte Schmelzpunkt liegt vorzugsweise in einem Bereich von 0 bis 170°C, weiter bevorzugt in einem Bereich von 20 bis 160°C, noch weiter bevorzugt in einem Bereich von 50 bis 145°C. Die Shore Härte liegt vorzugsweise in einem Bereich von 40 Sh A bis 50 Sh D, weiter bevorzugt in einem Bereich von 50 Sh A bis 40 Sh D, noch weiter bevorzugt in einem Bereich von 55 Sh A bis 95 Sh A. Die Dichte der auf Polypropylen basierenden thermoplastischen propylenhaltigen Elastomerkomponente liegt dabei vorzugsweise in einem Bereich von 0,85 bis 0,91 g/cm³, weiter bevorzugt in einem Bereich von 0,855 bis 0,89 g/cm³. Der Druckverformungsrest gemäß ISO 815-1 beträgt bei einem 6 mm dicken Prüfkörper und 25% Deformation bei 23°C für 72 Stunden, vorzugsweise 20 bis 70%, weiter bevorzugt 25 bis 45 %, noch weiter bevorzugt 30 bis 40 %.

Gemäß einer bevorzugten Ausführungsform der Erfindung liegt das thermoplastische Copolyesterelastomer in einem Anteil von 20 bis 80 Gew.-%, weiter bevorzugt von 35 Gew.-% bis 75, noch weiter bevorzugt von 45 bis 72 Gew.-%, jeweils bezogen auf das Gesamtgewicht des thermoplastischen propylenhaltigen Elastomers und dem wenigstens einen weiteren thermoplastischen Elastomer, vor.

Das bei der erfindungsgemäßen Zusammensetzung verwendete thermoplastische Copolyesterelastomer kann beispielsweise aus der Gruppe ausgewählt werden, die aus thermoplastischen Polyesteresterelastomeren, thermoplastischen Polyesteretherelastomeren und/oder thermoplastischen Polyesteretherelastomeren und Mischungen davon besteht.

Als bei der vorliegenden Erfindung verwendbare thermoplastische Copolyesterelastomere haben sich beispielsweise die von der Fa. DuPont, USA unter der Bezeichnung HYTREL, von der Fa. DSM, Niederlande unter der Bezeichnung ARNITEL, von der Fa. Ticona, USA unter der Bezeichnung RITEFLEX, von der Fa. LG Chemical, Korea unter der Bezeichnung KEYFLEX, von der Fa. P-Group, Italien unter der Bezeichnung PIBIFLEX und von der Fa. Eastman, USA unter der Bezeichnung ECDEL erwiesen. Selbstverständlich können auch Mischungen dieser thermoplastischen Copolyesterelastomere verwendet werden.

Gemäß einer bevorzugten Ausführungsform der Erfindung liegt das thermoplastische Polyurethanelastomer in einem Anteil von 20 bis 80 Gew.-%, weiter bevorzugt von 35 bis 75 Gew.-%, noch weiter bevorzugt von 45 bis 72 Gew.-%, jeweils bezogen auf das Gesamtgewicht des thermoplastischen propylenhaltigen Elastomers und dem wenigstens einen weiteren thermoplastischen Elastomer, vor.

Das bei der erfindungsgemäßen Zusammensetzung verwendete thermoplastische Polyurethanelastomer kann beispielsweise aus der Gruppe ausgewählt werden, die aus thermoplastischen Polyurethanesterelastomeren, thermoplastischen Polyurethanetherelastomeren, thermoplastischen Polyurethanesteretherelastomeren und/oder thermoplastischen Polyurethancarbonatelastomeren und Mischungen davon besteht.

Als bei der vorliegenden Erfindung verwendbare thermoplastische Polyurethanelastomere haben sich beispielsweise die von der Fa. Bayer, Deutschland unter den Bezeichnungen DESMOPAN und TEXIN, von der Fa. BASF, Deutschland unter der Bezeichnung ELASTOLLAN, von der Fa. Dow, USA unter der Bezeichnung PELLETHANE, von der Fa. Huntsman, USA unter den Bezeichnungen IROGRAN und KRYSTALGRAN, von der Fa. Lubrizol, USA unter den Bezeichnungen ESTANE, ESTAGRIP, TECOFLEX und CARBOTHANE, von der Fa. Merqinsa, Spanien unter der Bezeichnung PEARLTHANE und von der Fa. Kuraray, Tokio unter der Bezeichnung KURAMIRON erwiesen.

Selbstverständlich können auch Mischungen dieser thermoplastischen Polyurethanelastomere verwendet werden.

Gemäß einer bevorzugten Ausführungsform der Erfindung liegt das thermoplastische Polyamidelastomer in einem Anteil von 20 bis 80 Gew.-%, weiter bevorzugt von 35 bis 75 Gew.-%, noch weiter bevorzugt von 45 bis 72 Gew.-%, jeweils bezogen auf das Gesamtgewicht des thermoplastischen propylenhaltigen Elastomers und dem wenigstens einen weiteren thermoplastischen Elastomer, vor.

Das bei der erfindungsgemäßen Zusammensetzung verwendete thermoplastische Polyamidelastomer kann beispielsweise aus der Gruppe ausgewählt werden, die aus thermoplastischen Polyamidesterelastomeren, thermoplastischen Polyamidetherelastomeren und/oder thermoplastischen Polyamidetheresterelastomeren und Mischungen davon besteht.

Als bei der vorliegenden Erfindung verwendbare thermoplastische Polyamidelastomere haben sich beispielsweise die von der Fa. EMS-CHEMIE, EMS-GRIVORY, Schweiz unter den Bezeichnungen GRILFLEX, GRILAMID ELY und GRILAMID ELX, von der Fa. Arkema, Atochem, Atofina, Frankreich unter der Bezeichnung PEBAX und von der Fa. UBE Industries Japan unter den Bezeichnungen NYLON und UBESTA erwiesen.

Selbstverständlich können auch Mischungen dieser thermoplastischen Polyamidelastomere verwendet werden.

Bei einer bevorzugten erfindungsgemäßen Ausführungsform umfassen die thermoplastischen Polyesterelastomere, thermoplastischen Polyurethanenelastomere und thermoplastischen Polyamidelastomere Polymere der Formel I, Formel II und/oder Formel III:

H-[-X-R¹-X-]ₙ-[-Y-R¹-Y-]ₘ-OH (I)

und/oder der Formel II

H-[-X-R¹-Y-]ₙ-OH (II)

und/oder der Formel III

H-[-X-R¹-]ₙ-OH (III)

worin R¹ gleich (CH₂)₁, und/oder Phenyl, Cyclohexyl, Cyclopentenyl, Cyclooktyl, Cyclohexenyl, Naphthyl, Di-phenyldimethylmethan oder ein C₁-C₄-Alkylsubstituiertes Derivat davon ist, unter der Maßgabe, dass wenn R¹ gleich Phenyl ist, die X-Y Gruppen in ortho-, meta- oder para-Stellung zueinander stehen, und I gleich 1 bis 36 ist und m und n eine ganze Zahl, vorzugsweise 10 bis 1000 ist; worin X gleich O, S oder NR² sind, wobei R² gleich H oder C₁-C₄-Alkyl ist, worin Y gleich CO, COO, CONR³ sind, wobei R³ gleich H oder C₁-C₄-Alkyl ist.

Die bei der vorliegenden Erfindung verwendeten thermoplastischen Copolyesterelastomere, thermoplastischen Polyurethanelastomere sowie thermoplastischen Polyamidelastomere weisen üblicherweise unabhängig voneinander ein Molekulargewicht von 1000 bis 150000 g/mol, vorzugsweise von 2000 bis 95000 g/mol, weiter bevorzugt von 3000 bis 48000 g/mol, auf.

Die Schmelztemperatur des in der erfindungsgemäßen Kunststoffzusammensetzung verwendeten thermoplastischen propylenhaltigen Elastomers liegt vorzugsweise bei maximal 170°C, weiter bevorzugt bei maximal 160 °C, weiter bevorzugt bei maximal 145°C. Geeignet sind thermoplastische propylenhaltige Elastomere mit einer Schmelztemperatur aus einem Bereich von 0 bis 170°C.

Der Schmelzpunkt der thermoplastischen Copolyester-Elastomere liegt vorzugsweise in einem Bereich von 150 bis 220°C, weiter bevorzugt in einem Bereich von 170 bis 210°C.

Die Schmelztemperatur der thermoplastischen Polyurethan-Elastomere liegt vorzugsweise in einem Bereich von 80 bis 220°C, weiter bevorzugt in einem Bereich von 100 bis 150°C.

Die Schmelztemperatur der thermoplastischen Polyamid-Elastomere liegt vorzugsweise in einem Bereich von 120 bis 220 °C, weiter bevorzugt in einem Bereich von 140 bis 170°C.

Die erfindungsgemäße Kunststoffzusammensetzung weist eine Schmelztemperatur von vorzugsweise größer 130°C, weiter vorzugsweise von größer 150°C, noch weiter bevorzugt von größer 170°C, auf.
Die maximale Schmelztemperatur der erfindungsgemäßen Kunststoffzusammensetzung beträgt vorzugsweise maximal 220°C.

Gemäß einer weiteren bevorzugten Ausführungsform enthält die erfindungsgemäße Kunststoffzusammensetzung Additive.

Der Anteil an Additiven kann bis zu 80 Gew.-%, bezogen auf das Gesamtgewicht der Kunststoffzusammensetzung betragen. Wie bei der bevorzugten Ausführungsform liegt der Anteil an Additiven in einem Bereich von 4 bis 70 Gew.-%, weiter bevorzugt von 9 bis 60 Gew.-%, noch weiter bevorzugt von 14 bis 45 Gew.-%.

Gemäß einer Variante der Erfindung enthält die erfindungsgemäße Kunststoffzusammensetzung wenigstens einen Verträglichkeitsvermittler. Der Anteil des Verträglichkeitsvermittlers liegt dabei in einem Bereich von 1 bis 20 Gew.-%, bezogen auf das Gesamtgewicht der Kunststoffzusammensetzung.

Gemäß einer anderen Variante der Erfindung kann das thermoplastische propylenhaltige Elastomer mit polaren Gruppen, beispielsweise Carboxylgruppen, Hydroxylgruppen, Epoxidgruppen, Aminogruppen, Isocyanatgruppen und/oder (Meth)acrylatgruppen versehen sein. Bei dieser Variante ist die Verwendung eines Verträglichkeitsvermittlers nicht erforderlich.

Gemäß einer bevorzugten Variante ist das thermoplastische propylenhaltige Elastomer mit Maleinsäureanhydrid modifiziert.

Beispielsweise kann die erfindungsgemäße Kunststoffzusammensetzung 0 bis 30 Gew.-% Füllstoffe und/oder 0 bis 30 Gew.-% Weichmacher enthalten.

Ferner kann die erfindungsgemäße Kunststoffzusammensetzung Entformungshilfen, Gleitmittel, Farbmittel, Antioxidationsmittel, UV-Lichtschutzmittel, Biozide, Wärmestabilisatoren, Fasern, Haftvermittler, Benetzungsmittel, Schlagzähmacher, Treibmittel, Vernetzungsmittel, Antistatika und/oder Antiblockiermittel in einer Menge von jeweils und unabhängig voneinander 0 bis 5 Gew.-% enthalten. Die Angaben zu den Additiven in Gew.-% beziehen sich jeweils auf das Gesamtgewicht der erfindungsgemäßen Kunststoffzusammensetzung. Der Anteil sämtlicher zugesetzter Additive beträgt vorzugsweise maximal 80 Gew.-%.

Als Füllstoffe können beispielsweise Calciumcarbonat, Talkum, Kaolin, Wollastonit, Bariumsulfat, Glimmer, Quarz, Gesteinsmehle, etc. verwendet werden.

Als Fasern können beispielsweise Mineralfasern, Glasfasern, Kohlefasern, Aramidfasern, etc. verwendet werden.

Auch können selbstverständlich Nanotubes, Leitruße, Fullerene, etc. zugesetzt werden.

Die Beimischung von Additiven zu der erfindungsgemäßen Kunststoffzusammensetzung kann in Abhängigkeit von den jeweils verwendeten Vorrichtungen zur Herstellung von geschäumten Formkörpern und/oder von dem jeweiligen Verwendungszweck des geschäumten Formkörpers erfolgen. Wenn das Endprodukt beispielsweise intensivem Sonnenlicht ausgesetzt ist, dann kann es vorteilhaft sein, ein UV-Lichtschutzmittel der erfindungsgemäßen Kunststoffzusammensetzung hinzuzufügen. Entsprechend kann ein Wärmestabilisator hinzugefügt werden, wenn der geschäumte Formkörper dauerhaft erhöhten Temperaturen ausgesetzt ist. Die Zugabe eines Biozides kann angezeigt sein, wenn der geschäumte Formkörper gegenüber Feuchtigkeit ausgesetzt ist.

Gemäß einer bevorzugten Ausführungsform der Erfindung enthält die Kunststoffzusammensetzung weniger als 20 Gew.-% Ethylenpolymer, bezogen auf das Gesamtgewicht der Kunststoffzusammensetzung. Vorzugsweise beträgt der Anteil an Ethylenpolymer weniger als 15 Gew.-%, weiter bevorzugt weniger als 10 Gew.-%, noch weiter bevorzugt weniger als 5 Gew.-%, noch weiter bevorzugt weniger als 2 Gew.-%, jeweils bezogen auf das Gesamtgewicht der Kunststoffzusammensetzung. Gemäß einer Variante der Erfindung enthält die erfindungsgemäße Kunststoffzusammensetzung kein Ethylenpolymer.

Es hat sich gezeigt, dass die Haftung zwischen einem Polypropylen-haltigen Substrat, vorzugsweise einem Polypropylensubstrat, und dem erfindungsgemäßen Kunststoffschaum eine erhöhte Bindungskraft aufweist, wenn der Anteil an Ethylenpolymer weniger als 20 Gew.-%, bezogen auf das Gewicht der erfindungsgemäßen Kunststoffzusammensetzung, beträgt. Bei dem vorzugsweise in der erfindungsgemäßen Kunststoffzusammensetzung in einer Menge von weniger als 20 Gew.-% enthaltenen Ethylenpolymer handelt es sich insbesondere um Ethylen-Vinylactetat-Copolymer, Polyethylen, Ethylen-Säure-Copolymer, lonomer des Säure-Copolymers, Ethylen-Alkyl(meth)acrylat-Copolymer oder Kombinationen von zwei oder mehreren davon. Je geringer der Anteil an Ethylenpolymer in der erfindungsgemäßen Kunststoffzusammensetzung ist, desto höher ist die Bindungskraft zwischen einem Polypropylen-haltigen Substrat, vorzugsweise einem Polypropylensubstrat, und einem aus der erfindungsgemäßen Kunststoffzusammensetzung hergestellten und geschäumten Kunststoffschaum.

Der Gehalt an Polypropylen in dem Substrat beträgt vorzugsweise wenigstens 20 Gew.-%, weiter bevorzugt wenigstens 40 Gew.-%, noch weiter bevorzugt wenigstens 55 Gew.-%, noch weiter bevorzugt wenigstens 60 Gew.-%, jeweils bezogen auf das Gesamtgewicht des Polypropylen-haltigen Substrates. Gemäß einer bevorzugten Weiterbildung der Erfindung beträgt der Gehalt an Polypropylen in dem Polypropylen-haltigen Substrat wenigstens 90 Gew.-%, noch weiter bevorzugt wenigstens 98 Gew.-%, jeweils bezogen auf das Gesamtgewicht des Polypropylen-haltigen Substrates. Vorzugsweise besteht das Polypropylen-haltige Substrat, insbesondere bei Folien, zu 99 bis 100 Gew.-%, vorzugsweise zu 100 Gew.-%, aus Polypropylen, jeweils bezogen auf das Gesamtgewicht des Polypropylen-haltigen Substrates.

Bei dem Polypropylen-haltigen Substrat, vorzugsweise Polypropylensubstrat, kann es sich um einen Formkörper mit beliebiger Geometrie handeln. Vorzugsweise handelt es sich bei dem Polypropylen-haltigen Formkörper um ein flächiges Substrat, beispielsweise um eine Bahn, Folie, Deckschicht, Matte, etc., oder um einen dreidimensionalen Gegenstand, beispielsweise ein Gehäuse oder eine Abdeckung.

Gemäß einer weiteren bevorzugten Ausführungsform weist der Kunststoffschaum eine geschlossene Außenhaut auf. Es hat sich überraschend gezeigt, dass sich die geschlossene Außenhaut bei Verschäumung der erfindungsgemäßen Kunststoffzusammensetzung von selbst ausbildet. Unter einer geschlossenen Außenhaut wird auch eine nahezu vollständig geschlossene Außenhaut verstanden, bei der wenigstens 90%, vorzugsweise 95%, weiter vorzugsweise 98%, der Außenfläche geschlossen ist. Überraschenderweise bildet sich bei der Verschäumung der erfindungsgemäßen Kunststoffzusammensetzung überwiegend ein wenigstens teilweise geschlossenzelliger Kunststoffschaum aus. Unter einem wenigstens teilweise geschlossenzelligen Kunststoffschaum wird verstanden, dass 50% bis 100% der Poren geschlossenzellig sind. Geeigneterweise liegt der Anteil an geschlossenen Zellen in einem Bereich von 56 bis 89 %, weiter geeignet von 61 bis 79%, jeweils bezogen auf die Anzahl der Zellen.

Gemäß einer bevorzugten Ausführungsform weist der erfindungsgemäße Kunststoffschaum eine Dichtereduktion von mindestens 20%, weiter bevorzugt von mindestens 40%, jeweils bezogen auf die Dichte der ungeschäumten Kunststoffzusammensetzung. Die Dichte wird gemäß ISO 1183 bestimmt.

Der mittlere Durchmesser der Poren liegt dabei vorzugsweise in einem Bereich von 0,1 bis 1,5 mm, weiter bevorzugt von 0,2 bis 1,0 mm, noch weiter bevorzugt von 0,25 bis 0,5 mm.

Der erfindungsgemäße Kunststoffschaum wird durch Verschäumung der erfindungsgemäßen Kunststoffzusammensetzung erhalten. Die Verschäumung kann auf herkömmliche Weise erfolgen, beispielsweise mittels Schaumschlagverfahren oder mittels herkömmlichen Extrusions- oder Spritzgussverfahren, wobei Luft/Gas in die plastifizierte oder geschmolzene Kunststoffzusammensetzung eingeschlagen oder eingeblasen wird. Vorzugsweise erfolgt das Schäumen mittels Expansionsverfahren, wobei eine gasförmige Phase, die in der Schmelze der erfindungsgemäßen Kunststoffzusammensetzung dispergiert ist, expandiert wird. Beispielsweise kann die Expansion mittels Extrusionsschäumen erfolgen. Auch kann die Expansion während eines Spritzgussprozess durch teilweises Öffnen des Werkzeugs nach dem Einspritzvorgang erfolgen. Auch können Treibmittel zugesetzt werden und eine physikalische Expansion der geschmolzenen erfindungsgemäßen Kunststoffzusammensetzung bewirkt werden. Als physikalische Treibmittel können beispielsweise Fluor-Chlor- Kohlenwasserstoffe, Kohlendioxid, n-Pentan, t-Butanol, Cyclopentan und/oder Ethanol, etc. verwendet werden. Als chemische Treibmittel können beispielsweise Acetondicarbonsäure, Zitronensäure oder deren Derivate eingesetzt werden.

Der aus der erfindungsgemäßen Kunststoffzusammensetzung erzeugte erfindungsgemäße Kunststoffschaum kann an den Polypropylen-haltigen Formkörper angeschäumt werden, so dass der erfindungsgemäße Kunststoffschaum stoffschlüssig mit dem Polypropylen-haltigen Formkörper, vorzugsweise Polypropylenformkörper, verbindbar oder verbunden ist.

Gemäß einer bevorzugten Weiterbildung der Erfindung weist der stoffschlüssig mit einem Polypropylen-haltigen Formkörper verbundene Kunststoffschaum eine Haftkraft an Polypropylen von wenigstens 40N, bezogen auf eine Breite von 35mm, auf. Die Haftkraft wird mittels Rollenschälprüfung in einer Rollenschälprüfvorrichtung gemäß DIN EN 1464 (90°, Rollenschälprüfung) gemessen. Gemäß einer bevorzugten Weiterbildung der Erfindung beträgt die Haftkraft wenigstens 50N, bezogen auf eine Breite von 35mm, weiter bevorzugt wenigstens 70N, bezogen auf eine Breite von 35mm, noch weiter bevorzugt wenigstens 80N, bezogen auf eine Breite von 35mm. Bei weiteren bevorzugten Weiterbildungen beträgt die Haftkraft, jeweils gemessen in einer Rollenschälvorrichtung nach DIN EN 1464 (90°, Rollenschälprüfung), wenigstens 100N, bezogen auf eine Breite von 35mm, weiter bevorzugt wenigstens 125N, bezogen auf eine Breite von 35mm. Vorzugsweise liegt die Haftkraft in einem Bereich zwischen 50N und 200N, jeweils bezogen auf eine Breite von 35mm, weiter bevorzugt zwischen 70N und 180N, jeweils bezogen auf eine Breite von 35mm.

Gemäß einer weiter bevorzugten Ausführungsform weist die erfindungsgemäße Kunststoffzusammensetzung, vorzugsweise der erfindungsgemäße Kunststoffschaum, eine Kratzfestigkeit, gemessen auf Basis des Helligkeitsunterschiedes ΔL zwischen einem gekratzten und einem ungekratzten Bereich von kleiner 2 auf. Die Bestimmung der Kratzfestigkeit erfolgt dabei gemäß GME 60280 (GME: General Motors Europe). Die Messung des Helligkeitsunterschiedes ΔL zwischen einem gekratzten und einem ungekratzten Bereich erfolgt vorzugsweise mit einem Spektralphotometer Minolta CM 3700-d gemäß DIN 5033. Vorzugsweise beträgt der Helligkeitsunterschied ΔL zwischen einem gekratzten und einem ungekratzten Bereich weniger als 1,8, weiter bevorzugt weniger als 1,5, noch weiter bevorzugt weniger als 1,3. Als sehr geeignet hat sich eine Kratzfestigkeit ΔL von kleiner als 1,2 erwiesen. Weiterhin ist bevorzugt, dass der Helligkeitsunterschied ΔL weniger als 1,0, vorzugsweise weniger als 0,9, beträgt. Gemäß einer bevorzugten Weiterbildung der Erfindung liegt der Helligkeitsunterschied ΔL zwischen einem gekratzten und einem ungekratzten Bereich zwischen 0 und 1,8, weiter bevorzugt zwischen 0,1 und 1,5, noch weiter bevorzugt zwischen 0,15 und 1,2.

Wenn die erfindungsgemäße Kunststoffzusammensetzung in Form des erfindungsgemäßen Kunststoffschaums vorliegt, wird die Kratzbeständigkeit an der Oberfläche des Kunststoffschaums, vorzugsweise der geschlossenen Außenhaut, gemessen. Die erfindungsgemäße Kunststoffzusammensetzung, insbesondere der erfindungsgemäße Kunststoffschaum, weist eine hervorragende Kratzbeständigkeit, gemessen gemäß DIN 5033, auf. Mithin erlaubt die vorliegende Erfindung die Bereitstellung von Formkörpern, beispielsweise von Armlehnen, Armaturenbrettern, Lenkradummantelungen, Bedienelementen, wie Bedienrädern, Griffabdeckungen, flächigen Abdeckungen wie Armaturenbrettern oder Türverkleidungen, etc., die zum einen eine äußerst angenehme Haptik und zum anderen eine hervorragende Kratzbeständigkeit aufweisen.

Gemäß einer weiteren bevorzugten Ausführungsform der Erfindung weist die erfindungsgemäße Kunststoffzusammensetzung einen Druckverformungsrest gemäß ISO 815-1 bei 23°C für 70 Stunden von 0 bis 40%, vorzugsweise von 2 bis 30%, auf. Mithin ist der aus der erfindungsgemäßen Kunststoffzusammensetzung hergestellte erfindungsgemäße Kunststoffschaum äußerst formbeständig, so dass auch nach Belastung und intensivem Gebrauch der Kunststoffschaum sein Ausgangsvolumen vollständig bzw. nahezu vollständig aufweist. Beispielsweise bei Armlehnen ist es erwünscht, dass diese, auch nach jahrelangem Gebrauch, nicht zusammengedrückt sind, sondern ihr volles Volumen bzw. nahezu volles Volumen aufweisen.

Gemäß einer weiteren bevorzugten Ausführungsform weist die erfindungsgemäße Kunststoffzusammensetzung, vorzugsweise der erfindungsgemäße Kunststoffschaum, eine Shore A-Härte von wenigstens 65, weiter bevorzugt von wenigstens 69, weiter bevorzugt von wenigstens 73, noch weiter bevorzugt von wenigstens 78, auf. Gemäß einer weiteren bevorzugten Ausführungsform kann die Shore A-Härte auch wenigstens 84 betragen. Vorzugsweise liegt die Shore Härte in einem Bereich zwischen Sh A 65 bis Sh D 40, weiter bevorzugt zwischen 70 bis Sh A 95. Die Shore Härte wird dabei gemäß ISO 868 gemessen.

Die erfindungsgemäße Kunststoffzusammensetzung lässt sich überraschenderweise einfach herstellen.

Gemäß dem erfindungsgemäßen Verfahren werden in einem ersten Schritt (a) thermoplastisches propylenhaltiges Elastomer mit wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält, plastifiziert oder geschmolzen. Bei dem thermoplastischen propylenhaltigen Elastomer kann es sich um ein oder mehrere Polyolefinelastomere handeln. Ebenfalls kann es sich bei dem thermoplastischen Copolyesterelastomer, thermoplastischen Polyurethanelastomer, thermoplastischen Polyamidelastomer um jeweils eines oder jeweils eine Mischung oder um eine Mischung mit oder aus diesen thermoplastischen Elastomeren handeln. In einem zweiten Schritt (b) werden die in Schritt (a) plastifizierten oder geschmolzenen Komponenten gemischt, vorzugsweise innig gemischt.

Unter "Mischen" wird erfindungsgemäß die Bereitstellung einer homogenen Mischung verstanden. Dabei können die Komponenten vor, während oder nach dem Plastifizieren oder Schmelzen miteinander gemischt werden.

Gemäß einer weiteren Variante kann die in Schritt (b) erhaltene Mischung in einem Schritt (c) verschäumt werden. Die in Schritt (c) schäumende und/oder geschäumte Masse kann sodann in einem Schritt (d) unter Erhalt eines Kunststoffschaumes, vorzugsweise Formkörpers aus Kunststoffschaum geformt werden.

Die in Schritt (b) erhaltene Mischung kann gemäß einer weiteren Verfahrensvariante auch in einem Schritt (c) in ein Granulat überführt werden. Die Granulierung kann dabei auf herkömmliche dem Fachmann bekannte Art und Weise erfolgen.

Gemäß einer weiteren erfindungsgemäßen Verfahrensvariante kann ein Granulat, das eine Mischung mit thermoplastischem propylenhaltigem Elastomer und wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält, aufweist, in einem Schritt (a) plastifiziert oder geschmolzen werden, die sodann in Schritt (a) erhaltene plastifizierte oder geschmolzene Masse in einem Schritt (b) verschäumt und die in Schritt (b) erhaltene schäumende und/oder geschäumte Masse unter Erhalt eines Kunststoffschaums in einem Schritt (c) geformt werden.

Mithin erlaubt das erfindungsgemäße Verfahren auch die Bereitstellung eines Granulates, das in einem späteren Verfahrensschritt zu einem erfindungsgemäßen Kunststoffschaum verschäumt werden kann. Der erfindungsgemäße Kunststoffschaum kann jedoch auch direkt aus den Ausgangskomponenten nach deren Plastifizierung oder Schmelze durch Verschäumen und Formen hergestellt werden.

Das Verschäumen kann auf herkömmlichen Schäumanlagen, Spritzguss- oder Extrusionsanlagen durchgeführt werden. Beispielsweise kann das Schäumen während des Extrusionsprozesses oder des Spritzgießens erfolgen. Das erfindungsgemäße Granulat oder die Komponenten können beispielsweise einem Extruder oder einer Spritzgussanlage zusammen mit einem Treibmittel zugeführt werden. Das Treibmittel wird dabei vorzugsweise in der plastifizierten oder geschmolzenen Polymermasse homogen dispergiert. Die plastifizierte oder geschmolzene Polymermasse wird sodann samt Treibmittel in die Werkzeugform extrudiert oder spritzgegossen, in welcher vorzugsweise das eigentliche Schäumen erst beginnt.

Gemäß einer bevorzugten Ausführungsform der Erfindung enthält die erfindungsgemäße Kunststoffzusammensetzung ein Gemisch aus thermoplastischem propylenhaltigen Elastomer und wenigstens einem weiteren thermoplastischen Elastomer, ausgewählt aus der Gruppe, die thermoplastisches Copolyesterelastomer, thermoplastisches Polyurethanelastomer und Mischungen davon enthält.

Gemäß einer bevorzugten Ausführungsform der Erfindung enthält die erfindungsgemäße Kunststoffzusammensetzung ein Gemisch aus einem (Zahl: 1) thermoplastischen propylenhaltigen Elastomer und einem (Zahl: 1) weiteren thermoplastischen Elastomer, ausgewählt aus der Gruppe, die thermoplastisches Copolyesterelastomer, thermoplastisches Polyurethanelastomer, thermoplastisches Polyamidelastomer enthält.

Gemäß einer bevorzugten Ausführungsform der Erfindung enthält die erfindungsgemäße Kunststoffzusammensetzung ein Gemisch aus einem (Zahl: 1) thermoplastischen propylenhaltigen Elastomer und einem (Zahl: 1) weiteren thermoplastischen Elastomer, ausgewählt aus der Gruppe, die thermoplastisches Copolyesterelastomer, thermoplastisches Polyrethanelastomer enthält.

Gemäß einer weiteren Variante der Erfindung enthält die erfindungsgemäße Kunststoffzusammensetzung ein (Zahl: 1) thermoplastisches propylenhaltiges Elastomer und zwei weitere thermoplastische Elastomere, ausgewählt aus der Gruppe, die thermoplastisches Copolyesterelastomer, thermoplastisches Polyurethanelastomer und thermoplastisches Polyamidelastomer enthält.

Vorzugsweise enthält die erfindungsgemäße Kunststoffzusammensetzung eine Mischung aus thermoplastischem propylenhaltigen Elastomer, thermoplastischem Copolyesterelastomer und thermoplastischem Polyurethanelastomer.

Gemäß einer bevorzugten Ausführungsform der Erfindung enthält die erfindungsgemäße Kunststoffzusammensetzung ein Gemisch aus einem (Zahl: 1) thermoplastischen propylenhaltigen Elastomer und einem (Zahl: 1) thermoplastischen Copolyesterelastomer.

Darüber hinaus können auch Additive und weitere Hilfsmittel in der erfindungsgemäßem Kunststoffzusammensetzung oder dem erfindungsgemäßen Kunststoffschaum enthalten sein. Diese Additive und etwaigen weiteren Hilfsmittel können bei der Herstellung der erfindungsgemäßen Kunststoffzusamensetzung zugegeben werden. Es ist aber möglich, diese Additive und etwaigen weiteren Hilfsmittel auch erst kurz vor oder während des Verschäumens, beispielsweise in einem Extruder zuzugeben.

Gemäß einer bevorzugten Variante der Erfindung wird in der Werkzeugform vor dem Einbringen der schäumenden und/oder geschäumten Masse ein Polypropylen-haltiger Formkörper, vorzugsweise Polypropylenformkörper, angeordnet oder erzeugt, beispielsweise durch Einspritzen. Bei dieser Verfahrensvariante wird die erfindungsgemäße Kunststoffzusammensetzung an den Polypropylen-haltigen Formkörper, vorzugsweise Polypropylen-Formkörper, angeschäumt, mithin mit dem Polypropylen-haltigen Formkörper, vorzugsweise Polypropylenformkörper, stoffschlüssig verbunden.

Gemäß einer bevorzugten Ausführungsform enthält die erfindungsgemäße Kunststoffzusammensetzung thermoplastisches propylenhaltiges Elastomer und thermoplastisches Copolyesterelastomer.

Gemäß einer weiteren bevorzugten Ausführungsform der Erfindung enthält die erfindungsgemäße Kunststoffzusammensetzung thermoplastisches propylenhaltiges Elastomer und thermoplastisches Polyurethanelastomer.

Gemäß einer weiteren bevorzugten Ausführungsform der Erfindung enthält die erfindungsgemäße Kunststoffzusammensetzung thermoplastisches propylenhaltiges Elastomer und thermoplastisches Polyamidelastomer.

Gemäß einer weiteren Ausführungsform der Erfindung enthält die erfindungsgemäße Kunststoffzusammensetzung thermoplastisches propylenhaltiges Elastomer, thermoplastisches Copolyesterelastomer und thermoplastisches Polyurethanelastomer.

### Beispiele

### Erfindungsgemäße Beispiele 1 bis 15

In der nachstehenden Tabelle 1 sind die zur Herstellung der erfindungsgemäßen Kunststoffzusammensetzung jeweils verwendeten Komponenten sowie deren jeweiligen Mengenanteile in Gewichtsteilen angegeben. Insgesamt ergaben die hundert Gewichtsteile jeweils 10 kg. Die Komponenten wurden in einem Zweiwellenextruder (Fabrikat: ZD528 III, Hersteller: Coperion) in der Schmelze bei 180 bis 220°C extrudiert. Das homogene, schmelzflüssige Granulat wurde als Strang durch ein Wasserbad abgezogen und in einem Granulator (Fabrikat: CSG171/1, Hersteller: Dr. Collin GmbH) zu Granulatkörnern mit einem mittleren Durchmesser von 2 mm zerkleinert. Die gemäß den erfindungsgemäßen Beispielen 1 bis 15 hergestellten Granulate wurden in einer Spritzgussmaschine (Fabrikat: Arburg 420, Golden Edition, Hersteller: Arburg GmbH & Co. KG) zu Prüfplatten mit Abmessungen von 10cm x 15cm x 0,2cm bei 180 bis 200°C spritzgegossen.

Aus den Prüfplatten wurden sodann Shore Härte und Kratzfestigkeit untersucht.

Die Shore Härte wurde gemäß ISO 868 gemessen.

Die Kratzfestigkeit wurde gemäß DIN 5033 gemessen.

Die Schäumbarkeit wurde als Dichteunterschied zwischen dem Ausgangsmaterial und dem geschäumten Prüfkörper bestimmt. Der Prüfkörper (Rundscheibe mit einem Durchmesser von 19 mm und einer Dicke von 10mm) wurde durch Schäumen des Ausgangsmaterials mit 5 Gew.-% physikalischem Treibmittel (TCEL 180/65, Fa. PTS Plastic Technology Service Marketing- & Vertriebs-GmbH, 91587 Adelshofen, Deutschland) in der Werkzeugform der Spritzgussmaschine (Fabrikat: 420 2K, Hersteller: Arburg) durch das Prinzip "Formatmung", d.h. Öffnen des zuerst geschlossenen Werkzeugs bis eine Wanddickenänderung von 2mm auf 6mm möglich wird, hergestellt.

Die Haftkraft wurde gemessen, indem zunächst Prüfkörper auf der Spritzgussmaschine (Fabrikat: 420 2K, Hersteller: Arburg) im Zweikomponentenschiebewerkzeug hergestellt wurde. Im ersten Teil des Spritzgießprozesses wurde Polypropylen mit 30% Glasfaserverstärkung (PTS-CREALEN-EP8G6HS, Fa. PTS Plastic Technology Service Marketing- & Vertriebs- GmbH, 91587 Adelshofen, Deutschland) bei 200 bis 220°C zur Darstellung eines Haftrahmens in das Werkzeug eingespritzt. Im zweiten Verfahrensabschnitt wurden zur Herstellung des erfindungsgemäßen Kunststoffmaterials die jeweiligen thermoplastischen Elastomere bzw. thermoplastischen Elastomermischungen (siehe Tabelle 1) bei 180 bis 200°C in das gleiche Werkzeug zur Darstellung einer Dichtlippe eingespritzt. Die Ermittlung der Haftkraft über 35mm Breite erfolgte durch Rollenschälprüfung in einer Rollenschälprüfvorrichtung nach DIN EN 1464 (90Grad, Rollenschälprüfung).

Die Ergebnisse sind samt der jeweiligen Zusammensetzung in Tabelle 1 angegeben.

### Vergleichsbeispiele 1 bis 2

Als Vergleichsbeispiele wurden PTS-THERMOFLEX 85 (reines thermoplastisches Polystyrolelastomer) und PTS-UNIFLEX-U81A/4 (reines thermoplastisches Polyurethanelastomer) verwendet. Die Ergebnisse sind ebenfalls in Tabelle 1 angegeben.

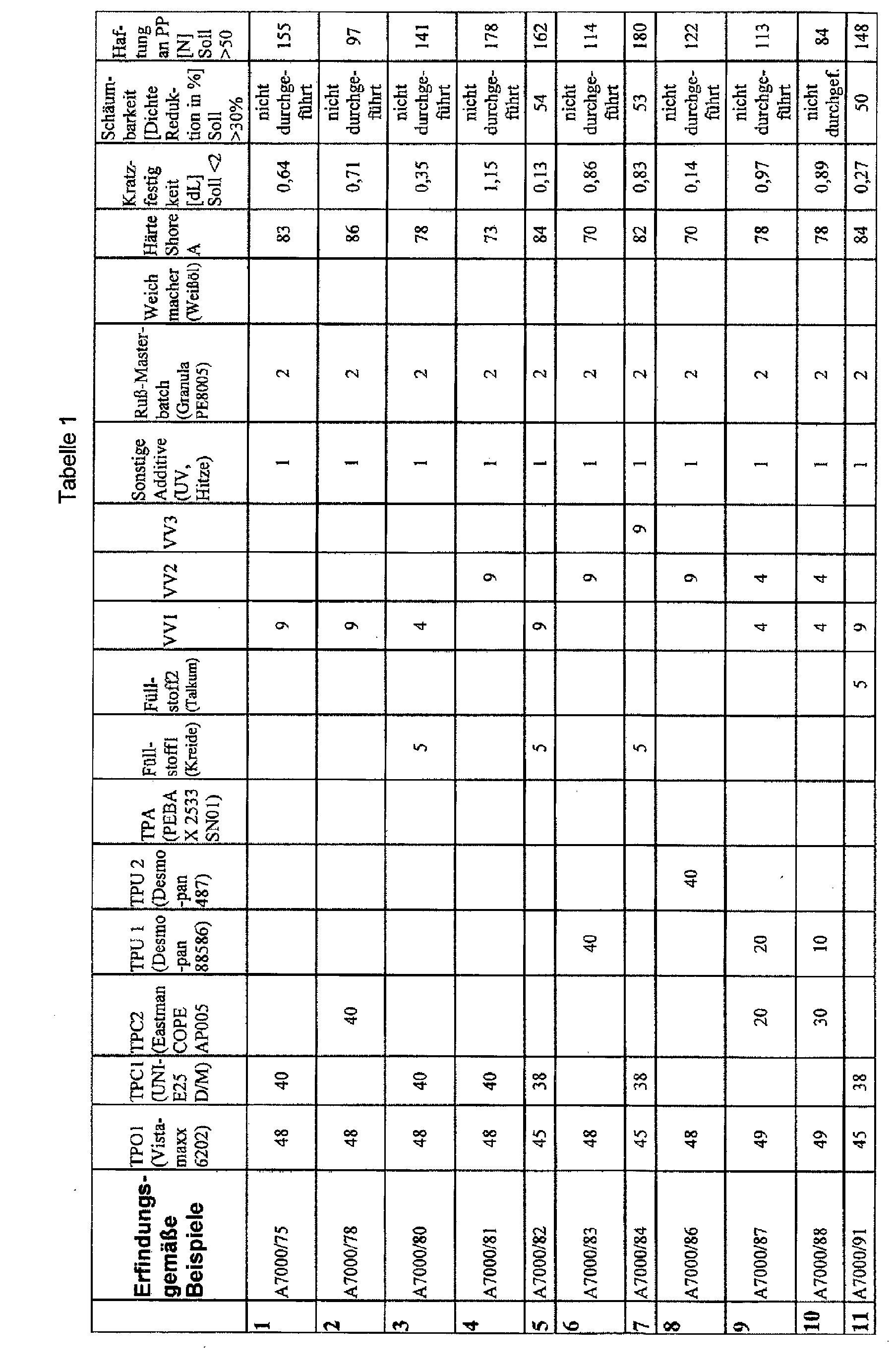

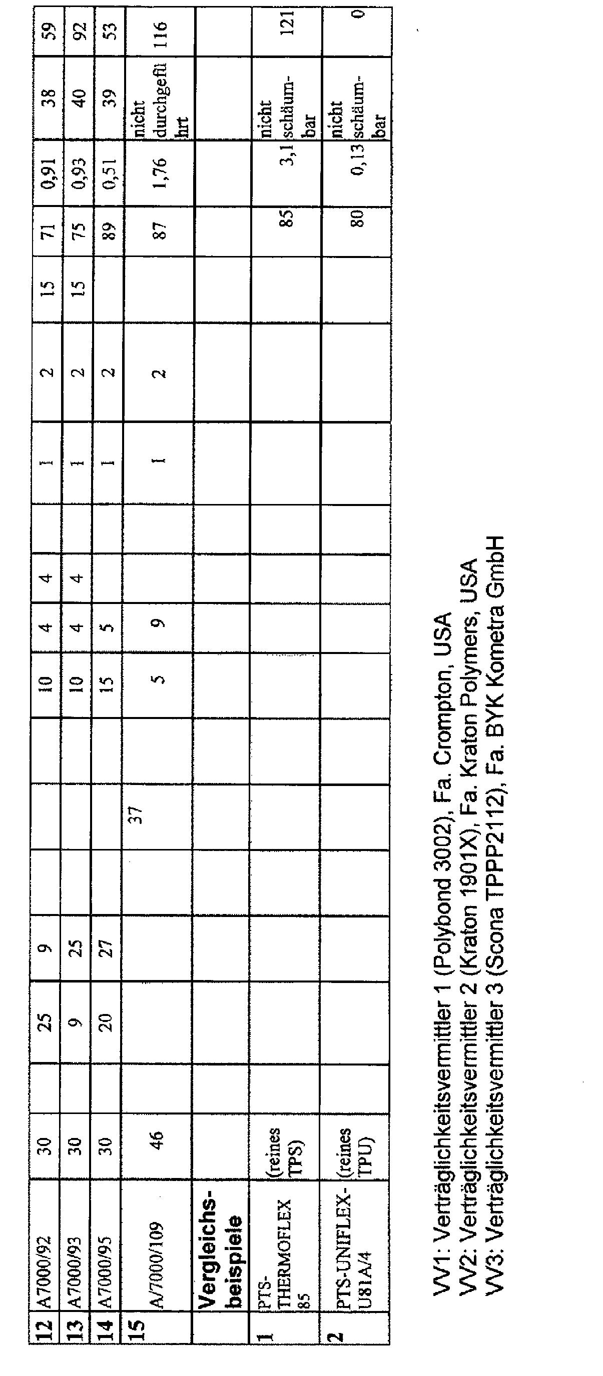

Wie Tabelle 1 entnommen werden kann, ist reines thermoplastisches Polystyrolelastomer nicht schäumbar und weist eine äußerst geringe Kratzfestigkeit auf, obgleich die Shore A-Härte 85 betrug und eine ausreichende Haftung an Polypropylen gegeben war. Reines thermoplastisches Polyurethan weist eine hohe Kratzfestigkeit bei einer Shore A-Härte von 80 auf, war ebenfalls nicht schäumbar und wies keinerlei Haftung an Polypropylen auf.

Dass die erfindungsgemäße Kunststoffzusammensetzung, insbesondere die erfindungsgemäßen Kunststoffschäume, eine angenehme Haptik, hohe Kratzfestigkeit und zugleich eine sehr gute Haftung an Polypropylen aufweisen, ist völlig überraschend.

## Patentansprüche

1. Kunststoffzusammensetzung,
**dadurch gekennzeichnet,**
**dass** die Kunststoffzusammensetzung eine Mischung mit thermoplastischem propylenhaltigen Elastomer und wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält, aufweist wobei das thermoplastische propylenhaltige Elastomer ein Polypropylen-enthaltendes Copolymer ist, wobei der Anteil des Polypropylens in dem Polypropylen-enthaltenden thermoplastischen propylenhaltigen Elastomer in einem Bereich von 51 bis 96 Gew.-%, bezogen auf das Gesamtgewicht des thermoplastischen propylenhaltigen Elastomers, liegt.

2. Kunststoffzusammensetzung nach Anspruch 1,
**dadurch gekennzeichnet,**
**dass** das thermoplastische propylenhaltige Elastomer in einem Anteil von 20 bis 80 Gew.-%, bezogen auf das Gesamtgewicht des thermoplastischen propylenhaltigen Elastomers und dem wenigstens einen weiteren thermoplastischen Elastomer, vorliegt.

3. Kunststoffzusammensetzung nach Anspruch 1 oder 2,
**dadurch gekennzeichnet,**
**dass** das thermoplastische Copolyesterelastomer in einem Anteil von 80 bis 20 Gew.-%, bezogen auf das Gesamtgewicht des thermoplastischen propylenhaltigen Elastomers und dem wenigstens einen weiteren thermoplastischen Elastomer, vorliegt.

4. Kunststoffzusammensetzung nach einem der vorhergehenden Ansprüche,
**dadurch gekennzeichnet,**
**dass** das thermoplastische Polyurethanelastomer in einem Anteil von 80 bis 20 Gew.-%, bezogen auf das Gesamtgewicht des thermoplastischen propylenhaltigen Elastomers und dem wenigstens einen weiteren thermoplastischen Elastomer, vorliegt.

5. Kunststoffzusammensetzung nach einem der vorhergehenden Ansprüche,
**dadurch gekennzeichnet,**
**dass** das thermoplastische Polyamidelastomer in einem Anteil von 80 bis 20 Gew.-%, bezogen auf das Gesamtgewicht des thermoplastischen propylenhaltigen Elastomers und dem wenigstens einen weiteren thermoplastischen Elastomer, vorliegt.

6. Kunststoffzusammensetzung nach einem der vorhergehenden Ansprüche,
**dadurch gekennzeichnet,**
**dass** die Kunststoffzusammensetzung Additive, vorzugsweise wenigstens einen Verträglichkeitsvermittler, enthält.

7. Kunststoffzusammensetzung nach einem der vorhergehenden Ansprüche,
**dadurch gekennzeichnet,**
**dass** das thermoplastische propylenhaltige Elastomer ein ethylenhaltiges Copolymerelastomer ist.

8. Kunststoffzusammensetzung nach einem der vorherigen Ansprüche,
**dadurch gekennzeichnet,**
**dass** das thermoplastische polypropylenhaltige Elastomer einen Anteil an Ethylen in einem Bereich von 4 bis 49 Gew.-%, bezogen auf das Gesamtgewicht des thermoplastischen polypropylenhaltigen Elastomers, aufweist.

9. Kunststoffzusammensetzung nach einem der vorhergehenden Ansprüche,
**dadurch gekennzeichnet,**
**dass** die Kunststoffzusammensetzung weniger als 20 Gew.-% Ethylenpolymer, bezogen auf das Gesamtgewicht der Kunststoffzusammensetzung, enthält.

10. Kunststoffzusammensetzung nach einem der vorhergehenden Ansprüche,
**dadurch gekennzeichnet,**
**dass** die Kunststoffzusammensetzung als Kunststoffschaum oder als Granulat vorliegt.

11. Kunststoffzusammensetzung nach Anspruch 10,
**dadurch gekennzeichnet,**
**dass** der Kunststoffschaum eine geschlossene Außenhaut aufweist.

12. Kunststoffzusammensetzung nach Anspruch 10 oder 11,
**dadurch gekennzeichnet,**
**dass** der Kunststoffschaum mit wenigstens einem polypropylenhaltigen Formkörper stoffschlüssig verbindbar oder verbunden ist.

13. Kunststoffzusammensetzung nach einem der Ansprüche 10 bis 12,
**dadurch gekennzeichnet,**
**dass** die Kunststoffzusammensetzung einen Druckverformungsrest gemäß ISO 815-1 von 0 bis 40 %, vorzugsweise von 2 bis 30 %, aufweist.

14. Kunststoffzusammensetzung nach einem der Ansprüche 10 bis 13,
**dadurch gekennzeichnet,**
**dass** der Kunststoffschaum eine Dichtereduktion von mindestens 20 %, weiter bevorzugt von mindestens 40 %, jeweils bezogen auf die Dichte der ungeschäumten Kunststoffzusammensetzung, aufweist.

15. Verfahren zur Herstellung einer Kunststoffzusammensetzung nach einem der vorhergehenden Ansprüche,
**dadurch gekennzeichnet,**
**dass** das Verfahren folgende Schritte aufweist:
(a) Plastifizieren oder Schmelzen des thermoplastischen propylenhaltigen Elastomers mit wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält,
(b) Mischen der in Schritt (a) plastifizierten oder geschmolzenen Komponenten.

16. Verfahren nach Anspruch 15,
**dadurch gekennzeichnet,**
**dass** das Verfahren folgenden weiteren Schritt aufweist:
(c) Überführen der in Schritt (b) erhaltenen Mischung in ein Granulat.

17. Verfahren zur Herstellung einer Kunststoffzusammensetzung nach einem der Ansprüche 1 bis 14,
**dadurch gekennzeichnet,**
**dass** das Verfahren folgende Schritte aufweist:
(a) Plastifizieren oder Schmelzen des thermoplastischen propylenhaltigen Elastomers mit wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält,
(b) Mischen der in Schritt (a) plastifizierten oder geschmolzenen Komponente,
(c) Verschäumen der in Schritt (b) erhaltenen Mischung,
(d) Formen der in Schritt (c) erhaltenen schäumenden und/oder geschäumten Mischung,
unter Erhalt eines Kunststoffschaums.

18. Verfahren zur Herstellung einer Kunststoffzusammensetzung nach einem der Ansprüche 1 bis 14,
**dadurch gekennzeichnet,**
**dass** das Verfahren folgende Schritte aufweist:
(a) Plastifizieren oder Schmelzen eines Granulats, das eine Mischung mit thermoplastischem propylenhaltigen Elastomer und wenigstens einem weiteren thermoplastischen Elastomer, ausgewählt aus der Gruppe, die thermoplastisches Copolyesterelastomer, thermoplastisches Polyurethanelastomer, thermoplastisches Polyamidelastomer und Mischungen davon enthält, aufweist,
(b) Verschäumen der in Schritt (a) plastifizierten oder geschmolzenen Masse,
(c) Formen der in Schritt (b) erhaltenen schäumenden und/oder geschäumten Masse,
unter Erhalt eines Kunststoffschaums.

19. Verfahren nach einem der Ansprüche 17 oder 18,
**dadurch gekennzeichnet,**
**dass** die schäumende und/oder geschäumte Masse in eine Werkzeugform eingebracht wird.

20. Verfahren nach Anspruch 19,
**dadurch gekennzeichnet,**
**dass** in der Werkzeugform vor dem Einbringen der schäumenden und/oder geschäumten Masse ein polypropylenhaltiger Formkörper angeordnet oder erzeugt wird.

## Claims

1. Plastic composition,
**characterised in that**,
the plastic composition hasa mixture of thermoplastic propylene-containing elastomers and at least one further thermoplastic elastomer, selected from the group containing thermoplastic copolyester elastomers, thermoplastic polyurethane elastomers, thermoplastic polyamide elastomers and mixtures thereof, whereinthe thermoplastic propylene-containing elastomer is a polypropylene-containing copolymer, wherein the proportion ofpolypropylene in thepolypropylene-containing thermoplasticpropylene-containing elastomer ranges from 51 to 96% by weight, based on the total weight of the thermoplastic propylene-containing elastomer.

2. Plastic composition according to claim 1,
**characterised in that**,
the thermoplastic propylene-containing elastomer is present in a proportion of 20 to 80% by weight based on the total weight of the thermoplastic propylene-containing elastomer and the at least one further thermoplastic elastomer.

3. Plastic composition according to claim 1 or 2,
**characterised in that**,
the thermoplastic copolyester elastomer is present in a proportion of80 to 20% by weight based on the total weight of the thermoplastic propylene-containing elastomer and the at least one further thermoplastic elastomer.

4. Plastic composition according to one of the preceding claims,
**characterised in that**,
the thermoplastic polyurethane elastomer is present in a proportion of80 to 20% by weight based on the total weight of the thermoplastic propylene-containing elastomer and the at least one further thermoplastic elastomer.

5. Plastic composition according to one of the preceding claims,
**characterised in that**,
the thermoplastic polyamide elastomer is present in a proportion of 80 to 20% by weight based on the total weight of the thermoplastic propylene-containing elastomer and the at least one further thermoplastic elastomer.

6. Plastic composition according to one of the preceding claims,
**characterised in that**,
the plastic composition contains additives, preferably at least one compatibiliser.

7. Plastic composition according to one of the preceding claims,
**characterised in that**,
the thermoplastic propylene-containing elastomer is an ethylene-containing copolyester elastomer.

8. Plastic composition according to one of the preceding claims,
**characterised in that**,
the thermoplastic propylene-containing elastomer has a proportion of ethylene ranging from 4 to49% by weight based on the total weight of the thermoplastic polypropylene-containing elastomer.

9. Plastic composition according to one of the preceding claims,
**characterised in that**,
the plastic composition containsless than 20% by weight of ethylene polymer, based on the total weight of the plastic composition.

10. Plastic composition according to one of the preceding claims,
**characterised in that**,
the plastic composition is present as a plastic foam or as granulate.

11. Plastic composition according to claim 10,
**characterised in that**,
the plastic foam has a closed outer skin.

12. Plastic composition according to claim 10 or 11,
**characterised in that**,
the plastic foam can be or is firmly bonded with at least one polypropylene-containing mould.

13. Plastic composition according to one of claims 10 to 12,
**characterised in that**,
the plastic composition has a compression set, in accordance with ISO 815-1,from 0 to 40%, preferably from 2 to 30%.

14. Plastic composition according to one of claims 10 to 13,
**characterised in that**,
the plastic foam has a reductionof at least 20%, preferably of at least 40%, indensity respectively, compared to the densityof the unfoamed plastic composition.

15. Method for theproduction of a plastic composition according to one of the preceding claims,
**characterised in that**,
the method has the following steps:
(a) plasticisation or melting of the thermoplastic propylene-containing elastomer with at least one further thermoplastic elastomer, selected from the group containing thermoplastic copolyester elastomers, thermoplastic polyurethane elastomers, thermoplasticpolyamide elastomers and mixtures thereof,
(b) mixing of the components plasticised or melted in step (a).

16. Method according to claim 15,
**characterised in that**,
the method has the following further step:
(c) converting the mixture obtained by step (b) into a granulate.

17. Method for theproduction of a plastic composition according to one of claims 1 to 14,
**characterised in that**,
the method has the following steps:
(a) plasticisation or melting of the thermoplastic propylene-containing elastomer with at least one further thermoplastic elastomer, selected from the group containing thermoplastic copolyester elastomers, thermoplastic polyurethane elastomers, thermoplastic polyamide elastomers and mixtures thereof,
(b) mixing of the components plasticised or melted in step (a) ,
(c) foaming of the mixture obtained by step (b),
(d) moulding of the foaming and/or foamed mixture obtained instep (c),
to produce a plastic foam.

18. Method for theproduction of a plastic composition according to one of claims 1 to 14,
**characterised in that**,
the method has the following steps:
(a) plasticisation or melting of a granulatethat has a mixture of thermoplastic propylene-containing elastomer and at least one further thermoplastic elastomer, selected from the group containing thermoplastic copolyester elastomers, thermoplastic polyurethane elastomers, thermoplastic polyamide elastomers and mixtures thereof,
(b) foaming of the massplasticised or melted in step (a),
(c) moulding of the foaming and/or foamed mass obtained instep (b),
to produce a plastic foam.

19. Method according to one of claims 17 or 18,
**characterised in that**,
the foaming and/or foamed massis inserted into a tool mould.

20. Method according to claim 19,
**characterised in that**,
before the insertion of the foaming and/or foamed mass, a polypropylene-containing mould is arranged or produced in the mould tool.

## Revendications

1. Composition de matière synthétique,
**caractérisée en ce que**
la composition de matière synthétique présente un mélange comprenant un élastomère thermoplastique contenant du propylène et au moins un autre élastomère thermplastique choisi parmi le groupe contenant un copolyester élastomère thermoplastique, un élastomère de polyuréthane thermoplastique, un élastomère de polyamide thermoplastique et des mélanges de ces derniers, sachant que l'élastomère thermoplastique contenant du propylène est un copolymère contenant un polypropylène, sachant que la fraction de polypropylène présente dans l'élastomère thermoplastique contenant du propylène et du polypropylène est comprise dans une plage allant de 51 à 96 % en poids par rapport au poids total de l'élastomère thermoplastique contenant du propylène.

2. Composition de matière synthétique selon la revendication 1,
**caractérisée en ce que**
l'élastomère thermoplastique contenant du propylène est présent en une fraction allant de 20 à 80 % en poids par rapport au poids total de l'élastomère thermoplastique contenant du propylène et dans l'autre élastomère thermoplastique au moins au nombre de un.

3. Composition de matière synthétique selon la revendication 1 ou 2,
**caractérisée en ce que**
le copolyester élastomère thermoplastique est présent en une fraction allant de 80 à 20 % en poids par rapport au poids total de l'élastomère thermoplastique contenant du propylène et dans l'autre élastomère thermoplastique au moins au nombre de un.

4. Composition de matière synthétique selon l'une quelconque des revendications précédentes,
**caractérisée en ce que**
1"élastomère de polyuréthane thermoplastique est présent en une fraction allant de 80 à 20 % en poids par rapport au poids total de l'élastomère thermoplastique contenant du propylène et dans l'autre élastomère thermoplastique au moins au nombre de un.

5. Composition de matière synthétique selon l'une quelconque des revendications précédentes,
**caractérisée en ce que**
l'élastomère de polyamide thermoplastique est présent en une fraction allant de 80 à 20 % en poids par rapport au poids total de l'élastomère thermoplastique contenant du propylène et dans l'autre élastomère thermoplastique au moins au nombre de un.

6. Composition de matière synthétique selon l'une quelconque des revendications précédentes,
**caractérisée en ce que**
la composition de matière synthétique contient des additifs, de préférence au moins un agent de compatibilité.

7. Composition de matière synthétique selon l'une quelconque des revendications précédentes,
**caractérisée en ce que**
l'élastomère thermoplastique contenant du propylène est un copolymère élastomère contenant de l'éthylène.

8. Composition de matière synthétique selon l'une quelconque des revendications précédentes,
**caractérisée en ce que**
l'élastomère thermoplastique contenant du polypropylène présente une fraction en éthylène comprise dans une plage allant de 4 à 49 % en poids par rapport au poids total de l'élastomère thermoplastique contenant du polypropylène.

9. Composition de matière synthétique selon l'une quelconque des revendications précédentes,
**caractérisée en ce que**
la composition de matière synthétique contient une fraction inférieure à 20 % en poids de polymère d'éthylène, par rapport au poids total de la composition de matière synthétique.

10. Composition de matière synthétique selon l'une quelconque des revendications précédentes,
**caractérisée en ce que**
la composition de matière synthétique est présente sous la forme d'une mousse synthétique ou sous la forme de granulés.

11. Composition de matière synthétique selon la revendication 10,
**caractérisée en ce que**
la mousse synthétique présente une enveloppe extérieure fermée.

12. Composition de matière synthétique selon la revendication 10 ou 11,
**caractérisée en ce que**
la mousse synthétique peut être reliée ou est reliée par liaison de matière à au moins un corps moulé contenant du polypropylène.

13. Composition de matière synthétique selon l'une quelconque des revendications 10 à 12,
**caractérisée en ce que**
la composition de matière synthétique présente une déformation rémanente à la pression selon la norme ISO 815-1 allant de 0 à 40 %, de préférence allant de 2 à 30 %.

14. Composition de matière synthétique selon l'une quelconque des revendications 10 à 13,
**caractérisée en ce que**
la mousse synthétique présente une réduction de densité d'au moins 20 %, de manière davantage préférée d'au moins 40 %, respectivement par rapport à la densité de la composition de matière synthétique non expansée.

15. Procédé servant à fabriquer une composition de matière synthétique selon l'une quelconque des revendications précédentes,
**caractérisé en ce que**
le procédé présente les étapes suivantes consistant à :
(a) plastifier ou faire fondre l'élastomère thermoplastique contenant du propylène avec au moins un autre élastomère thermoplastique, choisi parmi le groupe contenant un copolyester élastomère thermoplastique, un élastomère de polyuréthane thermoplastique, un élastomère de polyamide thermoplastique et des mélanges de ces derniers,
(b) mélanger les composants plastifiés ou fondus à l'étape (a).

16. Procédé selon la revendication 15,
**caractérisé en ce que**
le procédé présente l'étape supplémentaire qui suit :
(c) transformer le mélange obtenu à l'étape (b) en des granulés.

17. Procédé servant à fabriquer une composition de matière synthétique selon l'une quelconque des revendications 1 à 14,
**caractérisé en ce que**
le procédé présente les étapes qui suivent consistant à :
(a) plastifier ou faire fondre l'élastomère thermoplastique contenant du propylène avec au moins un autre élastomère thermoplastique, choisi parmi le groupe contenant un copolyester élastomère thermoplastique, un élastomère de polyuréthane thermoplastique, un élastomère de polyamide thermoplastique et des mélanges de ces derniers,
(b) mélanger les composants plastifiés ou fondus à l'étape (a),
(c) expanser le mélange obtenu à l'étape (b),
(d) mettre en forme le mélange subissant une expansion et/ou expansé obtenu à l'étape (c),
en obtenant une mousse synthétique.

18. Procédé servant à fabriquer une composition de matière synthétique selon l'une quelconque des revendications 1 à 14,
**caractérisé en ce que**
le procédé présente les étapes qui suivent consistant à :
(a) plastifier ou faire fondre des granulés, qui présentent un mélange comprenant un élastomère thermoplastique contenant du propylène et au moins un autre élastomère thermoplastique, choisi parmi le groupe contenant un copolyester élastomère thermoplastique, un élastomère de polyuréthane thermoplastique, un élastomère de polyamide thermoplastique et des mélanges de ces derniers,
(b) expanser la masse plastifiée ou fondue à l'étape (a),
(c) mettre en forme la masse subissant une expansion et/ou expansée obtenue à l'étape (b),
en obtenant une mousse synthétique.

19. Procédé selon l'une quelconque des revendications 17 ou 18,
**caractérisé en ce que**
la masse subissant une expansion et/ou expansée est introduite dans un moule.

20. Procédé selon la revendication 19,
**caractérisé en ce que**
un corps moulé contenant du polypropylène est disposé ou produit dans le moule avant l'introduction de la masse subissant une expansion et/ou expansée.
